# EUROPEAN PATENT SPECIFICATION

(11) **EP 2 855 396 B1**
(45) Date of publication and mention of the grant of the patent: **22.11.2017**
(21) Application number: 13739526.5
(22) Date of filing: 17.05.2013
(51) Int. Cl.: C04B 33/34, C04B 33/24, C04B 41/86, C03C 3/087, C03C 8/02, C04B 41/00, C04B 41/50, A47J 36/04, C04B 111/00

(54) **PORCELAIN POT PROVIDING COOKING IN DIRECT CONTACT WITH FIRE**
PORZELLANTOPF ZUM KOCHEN IN DIREKTEM KONTAKT MIT FEUER
MARMITE EN PORCELAINE ASSURANT LA CUISSON EN CONTACT DIRECT AVEC LE FEU

(30) Priority: 30.05.2012 TR 201206357
(43) Date of publication of application: 08.04.2015
(73) Proprietor: Kütahya Porselen Sanayi Anonim Sirketi, Merkez Kütahya (TR)
(72) Inventor: GÜRAL SÜRMEL , Sema, Kütahya (TR)
(74) Representative: Dereligil, Ersin
(86) International application number: PCT/TR2013/000152
(87) International publication number: WO 2013/180674

(56) References cited:
- WO-A1-2008/050937
- WO-A2-00/06513
- US-A- 4 229 494

## Description

### Technical Field

The present invention is related to porcelain pot used for cooking directly on fire.

The present invention is especially related to porcelain pot used for cooking foods such as all kinds of liquid food, and rice dish cooked with less water or water evaporated, by putting on fire directly and manufactured by being sintered at a certain temperature by using porcelain manufacture method.

### State of the Art

Today, ovenwares manufactured in porcelain sector are heat resistant. However, when said wares are directly put on fire, they craze as a result of stresses occurring therein. Heat resistant ceramic wares are used all around the world in the state of art. However, crazes occur in the glaze structure of said products after they contact with fire. The risk of bacterial growth in the crazes adversely affects the human health. In addition, hot pots are included in the category of fired potteries, but they are not included in hard porcelain category. In order for a product made of fired clay to be called hard porcelain, they have to be fired at high temperature such as 1400 - 1430 °C and water absorption value thereof is required to be lower than 0,05%. Asbestos clay is used in the manufacture of said wares. While using, the harmful substances therein penetrate into food and threaten human health. The document No. WO00/06513 relates to a glazing recipe comprising the raw materials of Na₂O, K₂O, CaO, MgO, Al₂O₃, Fe₂O₃, SiO₂, and TiO₂ for covering dishes produced from a raw materials composition of 5-10% of feldspar, 60-75% of kaolin and 20-30% of quartz. The document No. US4229494 A relates to application of a mixture also comprising the organic materials onto a porous terra sigillata used for cooking bread. Said coating application provides the product with non-adhesive property. And its cooking temperature is 950-11600°C. Said composition comprises the raw materials of SiO₂, Al₂O₃, Fe₂O₃, MgO, CaO, TiO₂, Na₂O, and K₂O.

Said document relates to an application with water absorption characteristics. That is to say, aqueous materials we use while cooking enter into the structure. And this increases the risk of formation of bacteria at the pores found on the structure.

The document No. WO2008050937 A1 relates to a heat resistant porcelain. Said porcelain comprises 2 different recipe compositions, which are the structure and glazing recipes. The ingredients of the structure recipe are: Na₂O: 0.01-0.05; K₂O: 0.01-0.12; CaO: 0.01-0.06; MgO: 0.13-0.35; ZnO: 0.01-0.02; Li₂O: 0.20-0.45; Al₂O₃: 1; SiO₂:3.80-5.20; ZrO₂: 0.01-0.10; and TiO₂: 0.01-0.02. The ingredients of the glazing recipe are: Na₂O: 0.01-0.05; K₂O: 0.01-0.05; CaO: 0.01-0.10; Li₂O: 0.65-0.91; BaO: 0.02-0.1; or PbO: 0.01-0.10; ZnO: 0.01-0.05; Al₂O₃: 0.35-1.40; Fe₂O₃: 0.00-0.02; SiO₂: 2.95-7.50; B₂O₃: 0.01-0.10; and ZrO₂: 0.01-0.04.

As a result, improvements are made in porcelain cookers and therefore, new embodiments eliminating the above mentioned drawbacks and offering new solution for the present systems are needed.

### Object of the Invention

The present invention is related to porcelain pot satisfying the above mentioned needs, eliminating all the drawbacks, offering additional advantages and used for cooking directly on fire. The present invention is especially related to porcelain pot used for cooking foods such as all kinds of liquid food, and rice dish cooked with less water or water evaporated, by putting on fire directly and manufactured by being sintered at a certain temperature by using porcelain manufacture method.

An object of the present invention is to provide heat resistant products fired at 1420 °C after being subject to porcelain tableware manufacture processes.

Another object of the present invention is to provide a product that can be used directly on fire thanks to its structure and glaze formulas.

Another object of the present invention is to provide a porcelain pot with no crazes at outer surface thereon after contacting with fire.

Another object of the present invention is to provide products in direct contact with fire without using harmful substances in the structure and glaze therein.

In order to achieve all the advantages mentioned above and understood from the detailed description below, the present invention is related to porcelain pot used by contacting directly with fire, characterized in that it comprises Na₂O, K₂O, CaO, MgO, Al₂O₃ and SiO₂ its structure and glaze formulas in amounts enabling said porcelain pot to be used in direct contact with fire.

The structural and characteristic features and all the advantages of the present invention will be understood more clearly with the figures below and the detailed description written with reference to those figures; therefore, the evaluation needs to be made by taking these figures and the detailed description into consideration.

### Brief Description of the Figures

In order for the embodiment and advantages of the present invention together with additional members to be understood best, it is required to be evaluated together with the figures described below.

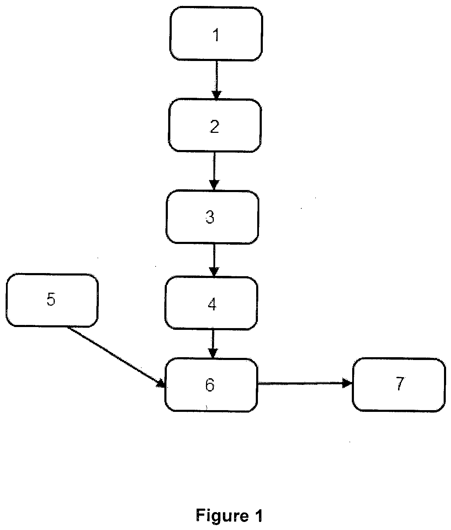

**Figure 1****:** The process chart of the porcelain pot manufacture according to the present invention.

The drawings do not necessarily need to be scaled and the details that are not necessary to understand the present invention may have been ignored. In addition, the members that are identical to a great extent or at least have identical functions are referred with the same numeral.

### Reference Numerals

**1.** Formula loading
**2.** Shaping
**3.** Drying
**4.** Biscuit firing
**5.** Loading glaze formula
**6.** Glazing
**7.** Glazed Firing

### Detailed Description of the Invention

In this detailed description, the preferred embodiments of the porcelain pot according to the present invention are described only in order for the subject to be understood better, without any limiting effect.

Generally, the present invention is a pot that is resistant against the direct fire. The present invention is subject to tableware manufacture processes. Figure 1 is the process flow chart of the porcelain pot manufacture according to the present invention. Here, formula loading (1) process is performed first. In the formula loading (1) process, the raw materials are weighed and grinding process is performed. The raw materials ground in mills are subject to several processes in order to be made ready for shaping (2) after being sieving.

While giving the raw materials included in the formula content in the present invention during formula loading (1), Seger formula is used. Seger formula is a calculating method used in ceramic sector. In accordance with the entire raw material analyses, the elements are measured separately on molar basis based on formula rate. In Seger formula, the total of basic oxides such as Na₂O, K₂O, CaO and MgO is rated so as to be 1 on molar basis. The rates of SiO₂ and Al₂O₃ are obtained by dividing their own molecular weights by total basic oxide.

In light of the information, the formula (1) content according to Seger formula consists only of 0,195- 0.205 Na₂O, 0,395-0,405 K₂O, 0,195- 0,205 CaO, 0,195-0,205 MgO, 5,6-6,6 Al₂O₃ and 24,7- 25,7 SiO₂. The preferred embodiments of the present invention consists only of 0,2 Na₂O, 0,4 K₂O, 0,2 CaO, 0,2 MgO, 6,1 Al₂O₃ and 25,2 SiO₂.

After loading formula, the next stage is shaping (2) said raw materials ground in mill, by using molds. The shaped raw materials are subject to drying (3) process for removing moisture. In the preferred embodiments of the present invention, the raw materials used are dried at 100±5 °C for 3 hours. The dried products are subject to biscuit firing (4) process. The products are fired for nearly 12 hours at nearly 980 °C in the preferred embodiments of the present invention.

The present invention is subject to a conventional porcelain manufacture process. The difference thereof from a conventional porcelain manufacture and the feature thereof that makes the porcelain pot to be resistant against direct fire are the processes of loading formula (1) and loading glazing formula (5). Thanks to the content of said formulas, the product is not shocked and does not craze, thermal expansion therein is adjusted according to this.

Loading glaze formula (5) is performed in the manufacture process after biscuit firing (4) process. Raw materials included in glaze formula (5) are weighed and ground in the mills. The glaze formula (5) consists only of 0,195- 0.205 Na₂O, 0,095-0,105 K₂O, 0,395- 0,405 CaO, 0,295-0,305 MgO, 0,995-1,005 Al₂O₃ and 4,595- 4,605 SiO₂ according to Seger formula. The preferred embodiments of the present invention consists only of 0,2 Na₂O, 0,1 K₂O, 0,4 CaO, 0,3 MgO, 0,1 Al₂O₃ and 4,6 SiO₂.

The biscuits (4) subject to first firing are glazed (6) with the glaze formula (5) prepared. The glazing process (6) is performed by plunging the product into the glaze. Following said process, the glazed firing (7) process, which is the last stage of porcelain manufacture, is performed. The products subject to glazing (6) process, are fired (7) at approximately 1420 °C for approximately 7 hours in the preferred embodiments of the present invention.

## Claims

1. A porcelain pot used by contacting directly with fire, **characterized in that**, of said porcelain pot,
• raw materials of the structure formula consists only of 0,195 to 0.205 Na₂O, 0,395 to 0,405 K₂O, 0,195 to 0,205 CaO, 0,195 to 0,205 MgO, 5,6 to 6,6 Al₂O₃ and 24,7 to 25,7 SiO₂ according to Seger formula,
• raw materials of the glaze formula consists only of 0,195 to 0.205 Na₂O, 0,095 to 0,105 K₂O, 0,395 to 0,405 CaO, 0,295 to 0,305 MgO, 0,995 to 1,005 Al₂O₃ and 4,595 to 4,605 SiO₂ according to Seger formula,
in amounts enabling the said porcelain pot to be used in direct contact with fire.

2. A porcelain pot according to Claim 1, **characterized in that** the raw materials of said structure formula consists only of 0,2 Na₂O, 0,4 K₂O, 0,2 CaO, 0,2 MgO, 6,1 Al₂O₃ and 25,2 SiO₂ according to Seger formula.

3. A porcelain pot according to Claim 1, **characterized in that** the raw materials of said glaze formula consists only of 0,2 Na₂O, 0,1 K₂O, 0,4 CaO, 0,3 MgO, 0,1 Al₂O₃ and 4,6 SiO₂ according to Seger formula.

4. The manufacture method of porcelain pot used by being contacted with fire directly by using the structure and glaze formulas mentioned in Claim 1, **characterized in that** it comprises the following process steps;
- loading structure formula (1),
- biscuit firing (4),
- loading glaze formula (5),
- glazing (6), and
- glazed firing (7).

5. A porcelain pot manufacture method according to Claim 4, **characterized in that** it comprises the process step of shaping (2) after the said process of loading structure formula (1).

6. A porcelain pot manufacture method according to Claims 4 and 5, **characterized in that** it comprises the process step of drying (3) after said process of shaping (2).

7. A porcelain pot manufacture method according to Claim 4, **characterized in that** it comprises the process step of weighing the content and filtering thereof during the process of loading formula (1).

8. A porcelain pot manufacture method according to Claims 4 and 5, **characterized in that** it comprises the process step of shaping (2) said formula in the molds.

9. A porcelain pot manufacture method according to Claims 4, 5 and 6, **characterized in that** it comprises the process step of drying (3) said formula contents at 100 °C and/or for 3 hours.

10. A porcelain pot manufacture method according to Claim 4, **characterized in that** said biscuit firing (4) process is performed at 980 °C and/or for 12 hours.

11. A porcelain pot manufacture method according to Claim 4, **characterized in that** it comprises the process steps of weighing the raw materials and filtering thereof during the process of loading glaze formula (5).

12. A porcelain pot manufacture method according to Claim 4, **characterized in that** it comprises the process step of glazing (6) the material subject to biscuit firing (5) process, by plunging into the glaze prepared during loading glaze formula (5).

13. A porcelain pot manufacture method according to Claim 4, **characterized in that** the said glazed firing (7) process is performed at 1420 °C and/or for 7 hours.

## Patentansprüche

1. Porzellantopf, der durch direktes Inkontaktbringen mit Feuer benutzt wird, **dadurch gekennzeichnet, dass** von dem Porzellantopf
• Rohmaterialien der Strukturrezeptur nur aus 0,195 bis 0,205 Na₂O, 0,395 bis 0,405 K₂O, 0,195 bis 0,205 CaO, 0,195 bis 0,205 MgO, 5,6 bis 6,6 Al₂O₃ und 24,7 bis 25,7 SiO₂ gemäß der Seger-Formel bestehen,
• Rohmaterialien der Glasurrezeptur nur aus 0,195 bis 0,205 Na₂O, 0,095 bis 0,105 K₂O, 0,395 bis 0,405 CaO, 0,295 bis 0,305 MgO, 0,995 bis 1,005 Al₂O₃ und 4,595 bis 4,605 SiO₂ gemäß der Seger-Formel bestehen,
in Mengen, die es ermöglichen, dass der Porzellantopf in direktem Kontakt mit Feuer benutzt wird.

2. Porzellantopf nach Anspruch 1, **dadurch gekennzeichnet, dass** die Rohmaterialien der Strukturrezeptur nur aus 0,2 Na₂O, 0,4 K₂O, 0,2 CaO, 0,2 MgO, 6,1 Al₂O₃ und 25,2 SiO₂ gemäß der Seger-Formel bestehen.

3. Porzellantopf nach Anspruch 1, **dadurch gekennzeichnet, dass** die Rohmaterialien der Glasurrezeptur nur aus 0,2 Na₂O, 0,1 K₂O, 0,4 CaO, 0,3 MgO, 0,1 Al₂O₃ und 4,6 SiO₂ gemäß der Seger-Formel bestehen.

4. Herstellungsverfahren für Porzellantopf, der benutzt wird, indem er direkt mit Feuer in Kontakt gebracht wird, unter Benutzen der Struktur- und Glasurrezepturen, die in Anspruch 1 genannt sind, **dadurch gekennzeichnet, dass** es die folgenden Arbeitsvorgänge umfasst:
- Laden von Strukturrezeptur (1),
- Schrühbrennen (4),
- Laden von Glasurrezeptur (5),
- Glasieren (6) und
- Glasurbrennen (7).

5. Porzellantopf-Herstellungsverfahren nach Anspruch 4, **dadurch gekennzeichnet, dass** es nach dem Arbeitsvorgang des Ladens von Strukturrezeptur (1) den Arbeitsschritt des Formgebens (2) umfasst.

6. Porzellantopf-Herstellungsverfahren nach Anspruch 4 und 5, **dadurch gekennzeichnet, dass** es nach dem Arbeitsvorgang des Formgebens (2) den Arbeitsschritt des Trocknens (3) umfasst.

7. Porzellantopf-Herstellungsverfahren nach Anspruch 4, **dadurch gekennzeichnet, dass** es während des Arbeitsvorgangs des Ladens von Rezeptur (1) den Arbeitsschritt des Wiegens des Inhalts und dessen Filtrierens umfasst.

8. Porzellantopf-Herstellungsverfahren nach Anspruch 4 und 5, **dadurch gekennzeichnet, dass** es den Arbeitsschritt des Formgebens (2) der Rezeptur in den Formen umfasst.

9. Porzellantopf-Herstellungsverfahren nach Anspruch 4, 5 und 6, **dadurch gekennzeichnet, dass** es den Arbeitsschritt des Trocknens (3) der Rezepturinhalte bei 100 °C und/oder während 3 Stunden umfasst.

10. Porzellantopf-Herstellungsverfahren nach Anspruch 4, **dadurch gekennzeichnet, dass** der Arbeitsvorgang des Schrühbrennens (4) bei 980 °C und/oder während 12 Stunden durchgeführt wird.

11. Porzellantopf-Herstellungsverfahren nach Anspruch 4, **dadurch gekennzeichnet, dass** es während des Arbeitsvorgangs des Ladens der Glasurrezeptur (5) die Arbeitsschritte des Wiegens der Rohmaterialien und deren Filtrierens umfasst.

12. Porzellantopf-Herstellungsverfahren nach Anspruch 4, **dadurch gekennzeichnet, dass** es den Arbeitsschritt des Glasierens (6) des Materials, das dem Arbeitsvorgang des Schrühbrennens (5) unterworfen wird, durch dessen Eintauchen in die Glasur, die während des Ladens der Glasurrezeptur (5) vorbereitet wird, umfasst.

13. Porzellantopf-Herstellungsverfahren nach Anspruch 4, **dadurch gekennzeichnet, dass** der Arbeitsvorgang des Glasurbrennens (7) bei 1.420 °C und/oder während 7 Stunden durchgeführt wird.

## Revendications

1. Marmite en porcelaine utilisée au contact direct du feu, **caractérisée en ce que**, de ladite marmite en porcelaine,
- les matières premières de la formule structurale sont uniquement constituées de 0,195 à 0,205 Na₂O, 0,395 à 0,405 K₂O, 0,195 à 0,205 CaO, 0,195 à 0,205 MgO, 5,6 à 6,6 Al₂O₃ et 24,7 à 25,7 SiO₂ selon la formule de Seger,
- les matières premières de la formule de glaçure sont uniquement constituées de 0,195 à 0,205 Na₂O, 0,095 à 0,105 K₂O, 0,395 à 0,405 CaO, 0,295 à 0,305 MgO, 0, 995 à 1,005 Al₂O₃ et 4,595 à 4,605 SiO₂ selon la formule de Seger,
en quantité permettant l'utilisation de ladite marmite en porcelaine au contact direct du feu.

2. Marmite en porcelaine selon la revendication 1, **caractérisée en ce que** les matières premières de ladite formule structurale sont uniquement constituées de 0,2 Na₂O, 0,4 K₂O, 0,2 CaO, 0,2 MgO, 6,1 Al₂O₃ et 25,2 SiO₂ selon la formule de Seger.

3. Marmite en porcelaine selon la revendication 1, **caractérisée en ce que** les matières premières de ladite formule de glaçure sont uniquement constituées de 0,2 Na₂O, 0,1 K₂O, 0,4 CaO, 0,3 MgO, 0,1 Al₂O₃ et 4,6 SiO₂ selon la formule de Seger.

4. Procédé de fabrication d'une marmite en porcelaine utilisée au contact direct du feu en utilisant les formules structurale et de glaçure selon la revendication 1, **caractérisé en ce qu'**il comprend les étapes de processus suivantes :
- chargement de la formule structurale (1),
- cuisson du biscuit (4),
- chargement de la formule de glaçure (5),
- glaçurage (6), et
- cuisson de la glaçure (7).

5. Procédé de fabrication de marmite en porcelaine selon la revendication 4, **caractérisé en ce qu'**il comprend l'étape de processus de mise en forme (2) après ledit processus de chargement de la formule structurale (1).

6. Procédé de fabrication de marmite en porcelaine selon les revendications 4 et 5, **caractérisé en ce qu'**il comprend l'étape de processus de séchage (3) après ledit processus de mise en forme (2).

7. Procédé de fabrication de marmite en porcelaine selon la revendication 4, **caractérisé en ce qu'**il comprend l'étape de processus de pesée du contenu et de filtration de celui-ci durant le processus de chargement de formule (1).

8. Procédé de fabrication de marmite en porcelaine selon les revendications 4 et 5, **caractérisé en ce qu'**il comprend l'étape de processus de mise en forme (2) de ladite formule dans les moules.

9. Procédé de fabrication de marmite en porcelaine selon les revendications 4, 5 et 6, **caractérisé en ce qu'**il comprend l'étape de processus de séchage (3) desdits contenus de la formule à approximativement 100 °C et/ou pendant approximativement 3 heures.

10. Procédé de fabrication de marmite en porcelaine selon la revendication 4, **caractérisé en ce que** ledit processus de cuisson du biscuit (4) est réalisé à 980 °C et/ou pendant 12 heures.

11. Procédé de fabrication de marmite en porcelaine selon la revendication 4, **caractérisé en ce qu'**il comprend les étapes de processus de pesée des matières premières et de filtration de celles-ci durant le processus de chargement de formule de glaçure (5).

12. Procédé de fabrication de marmite en porcelaine selon la revendication 4, **caractérisé en ce qu'**il comprend l'étape de processus de glaçurage (6) du matériau soumis au processus de cuisson de biscuit (5), en le plongeant dans la glaçure préparée durant le chargement de la formule de glaçure (5).

13. Procédé de fabrication de marmite en porcelaine selon la revendication 4, **caractérisé en ce que** ledit processus de cuisson de glaçure (7) est réalisé à 1 420 °C et/ou pendant 7 heures.
